# FASCICULE DE BREVET EUROPEEN

(11) **EP 2 313 678 B1**
(45) Date de publication et mention de la délivrance du brevet: **20.05.2015**
(21) Numéro de dépôt: 09804533.9
(22) Date de dépôt: 09.07.2009
(51) Int. Cl.: F16L 57/00, B65D 59/00

(54) **DISPOSITIF DE PROTECTION D'UN COMPOSANT TUBULAIRE FILETE ET COMPOSANT TUBULAIRE MUNI DU DISPOSITIF**
VORRICHTUNG ZUM SCHUTZ EINER RÖHRENFÖRMIGEN GEWINDEKOMPONENTE UND MIT DIESER VORRICHTUNG AUSGESTATTETE RÖHRENFÖRMIGE GEWINDEKOMPONENTE
DEVICE FOR PROTECTING A THREADED TUBULAR COMPONENT AND TUBULAR COMPONENT PROVIDED WITH THE DEVICE

(30) Priorité: 05.08.2008 FR 0804461
(43) Date de publication de la demande: 27.04.2011
(73) Titulaire: VALLOUREC OIL AND GAS FRANCE, 59620 Aulnoye-Aymeries (FR)
(72) Inventeur: DE DIEGO REYES, Arturo, Boca del Rio Veracruz 94299 (MX); ONTIVEROS CARMONA, David, Veracruz 91897 (MX)
(74) Mandataire: Pellicani, Félix Angelo
(86) Numéro de dépôt international: PCT/EP2009/058766
(87) Numéro de publication internationale: WO 2010/015484

(56) Documents cités:
- US-A- 1 853 945
- US-A- 4 020 873
- US-A- 4 655 256
- US-B1- 6 564 875

## Description

La présente invention concerne un dispositif pour protéger l'extrémité de composants tubulaires comportant un filetage et utilisés dans l'exploitation de puits d'hydrocarbures ou pour la géothermie. L'invention concerne également un composant tubulaire muni d'un dispositif de protection de son extrémité filetée.

De tels composants tubulaires peuvent par exemple consister en un tube de grande longueur ou bien un manchon, comportant en l'une de ses extrémités un filetage femelle destiné à le raccorder à l'extrémité d'un autre tube dotée d'un filetage mâle.

Ces composants tubulaires sont notamment utilisés pour réaliser des colonnes étanches de tubes de cuvelage ou de production pour des puits d'hydrocarbures ou pour des puits similaires tels que, par exemple, des puits pour la géothermie.

L'invention concerne plus particulièrement la protection des extrémités filetées des composants tubulaires dits « expansibles ». On entend par «composants tubulaires expansibles », les composants tubulaires amenés à subir une expansion de leur diamètre de l'ordre de 15 à 25 % une fois leur installation effectuée dans le puits. L'opération d'expansion est une déformation plastique de la colonne, qui s'effectue en faisant parcourir toute la colonne par un mandrin dont le diamètre extérieur correspond au diamètre intérieur que l'on veut atteindre pour la colonne. L'opération d'expansion est effectuée principalement sur les colonnes de tubes de cuvelage lorsqu'on veut les colmater ou bien les renforcer, et sur les colonnes de tubes de production lorsqu'on veut augmenter la production du puits.

L'essentiel des difficultés des opérations d'expansion concerne avant tout les connexions entre les composants tubulaires qui composent la colonne. En effet, ces derniers, dotés d'extrémités filetées complémentaires mâle / femelle sont raccordés entre eux par vissage. Or, les extrémités filetées sont des zones extrêmement critiques puisqu'elles présentent des épaisseurs faibles. Aussi, lorsque ces extrémités subissent des chocs ou bien des frottements occasionnant des impacts, des rayures ou bien des microfissurations, il peut arriver que les opérations d'expansion, qui déforment plastiquement les composants tubulaires, induisent une propagation des fissures au niveau de l'extrémité filetée. Ce phénomène est particulièrement problématique, dans la mesure où cette défaillance peut mener à une casse de la colonne au niveau de la connexion ou dans une moindre mesure à une perte de l'étanchéité de la connexion.

Afin, de remédier à ce problème, il est par conséquent nécessaire de protéger contre les chocs les extrémités filetées des composants tubulaires, lorsque lesdits composants tubulaires sont manipulés sur les chaînes de fabrication, dans toutes les phases de transport ou bien sur les chantiers.

Après consultation de l'art antérieur, il apparaît que les diverses solutions proposées consistent généralement à visser au niveau de l'extrémité du composant tubulaire un dispositif de protection apte à recouvrir la surface extérieure de l'extrémité du composant tubulaire. Les spécifications concernant la protection des composants tubulaires vis-à-vis des chocs est définie suivant la norme API (American Petroleum Institute) en annexe I du volume 5CT.

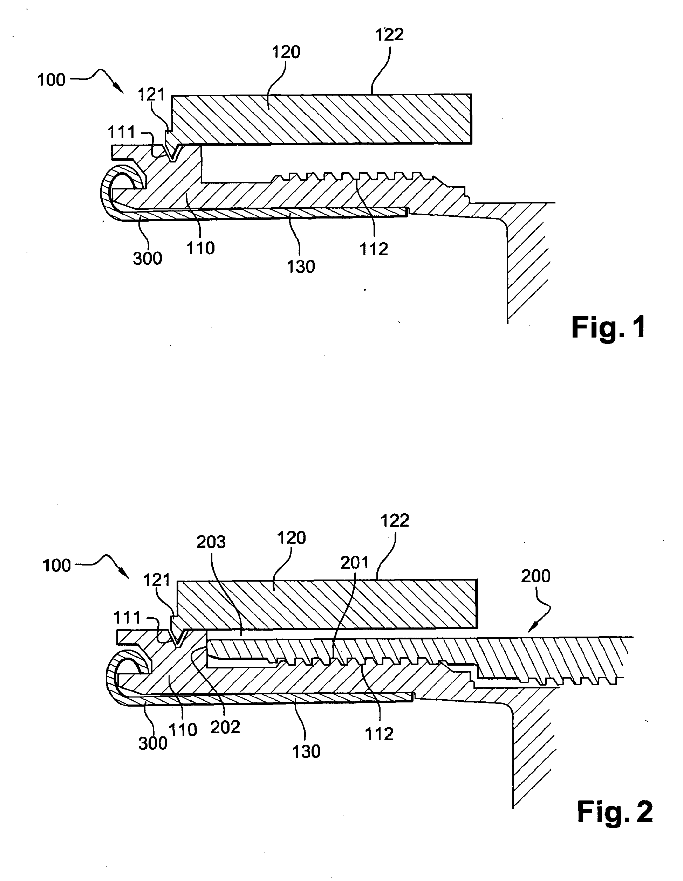

Par exemple, le document US6564875 décrit un dispositif destiné à protéger l'extrémité d'un composant tant au niveau du filetage femelle qu'au niveau de la surface externe de l'extrémité. Plus particulièrement la figure 1 montre que le dispositif de protection est constitué d'un anneau tubulaire 120 apte à recouvrir la surface extérieure de l'extrémité 135 et d'un embout 110 apte à être vissé dans l'extrémité femelle du composant tubulaire. Selon le montage, l'extrémité femelle, l'anneau et l'embout sont solidaires et fixes les uns par rapport aux autres. En effet, l'embout est vissé solidement dans l'extrémité femelle, prenant en étau la collerette 132 de l'anneau tubulaire.

Toutefois, le dispositif décrit présente l'inconvénient suivant : lors du transport ou bien de la manutention des composants tubulaires, lesdits composants et par voie de conséquence l'anneau du dispositif de protection, sont amenés à rouler. L'anneau entraîne ainsi en rotation l'embout, ce qui peut occasionner, selon le sens de rotation, le dévissage de l'embout du dispositif de protection.

Suivant un autre art antérieur, il a été utilisé aussi un protecteur pour connexion expansible composé de deux parties assemblées par des vis, la première partie étant vissée à l'intérieur de la connexion et la seconde partie entourant l'extrémité de la connexion. Toutefois, en cas de choc sur le protecteur, les vis traversent le protecteur en plastique et percutent la connexion.

C'est pourquoi, l'invention a pour objet de pallier à la problématique du dévissage du dispositif de protection sans risquer d'endommager le composant tubulaire.

Le document US4020873 décrit un protecteur pour extrémité filetée mâle de composant tubulaire constitué, d'une part, d'une enveloppe interne sous forme de deux demi-coquilles filetées intérieurement présentant une collerette dirigée vers l'axe à une de ses extrémités et un épaulement annulaire extérieur à l'autre de ses extrémités et, d'autre part, un manchon externe conjugué de l'enveloppe interne présentant intérieurement un retour à une extrémité et une cavité annulaire à l'autre extrémité. Les demi-coquilles de l'enveloppe interne sont disposées sur l'extrémité filetée mâle à protéger, le filetage intérieur de l'enveloppe interne étant engagé sur le filetage de l'extrémité mâle à protéger et la collerette étant en appui contre la surface frontale de l'extrémité filetée mâle. Le manchon externe est ensuite placé autour de l'enveloppe interne pour recouvrir celle-ci. Il est alors solidarisé à l'enveloppe interne par l'appui de son retour intérieur contre la collerette de l'enveloppe interne et par l'engagement frottant de l'épaulement extérieur de l'enveloppe interne dans la cavité annulaire du manchon. Malgré l'engagement frottant de l'épaulement intérieur contre la cavité annulaire, ce document indique que le manchon peut tourner autour de son axe indépendamment de l'enveloppe et de l'extrémité filetée.

Le protecteur selon ce document est toutefois spécifiquement conçu pour protéger une extrémité filetée mâle et ne peut facilement être transposé à la protection d'une extrémité filetée femelle.

L'invention a pour objet un dispositif pour protéger l'extrémité d'un composant tubulaire, ladite extrémité comportant une première zone filetée femelle, le dispositif comportant un embout doté d'une seconde zone filetée mâle apte à coopérer avec la première zone filetée femelle du composant tubulaire, et un anneau apte à couvrir une partie de la surface externe de l'extrémité du composant tubulaire, caractérisé en ce que l'anneau est solidaire de l'embout, de sorte que l'anneau est libre de tourner sur lui-même indépendamment de l'embout.

Selon certaines caractéristiques, l'embout et l'anneau sont encliquetés.

Selon d'autres caractéristiques, l'encliquetage est constitué d'une rainure pratiquée dans l'embout et d'au moins un ergot rapporté sur l'anneau.

Selon un mode préférentiel selon lequel l'encliquetage est constitué d'une rainure pratiquée dans l'embout, l'anneau comporte trois ergots équidistants les uns des autres.

Selon d'autres caractéristiques, la surface externe de l'anneau comporte des cannelures s'étendant suivant une direction voisine de l'axe de révolution de l'anneau.

Selon d'autres caractéristiques, l'anneau et l'embout sont en matériau synthétique absorbant les chocs.

Selon d'autres caractéristiques, l'anneau et l'embout sont en polyéthylène haute densité.

Selon d'autres caractéristiques, le dispositif comprend un moyen apte à rigidifier l'embout.

L'invention a aussi pour objet un ensemble constitué d'un composant tubulaire doté d'une extrémité protégée par un dispositif conforme à un mode de réalisation de l'invention.

Selon certaines caractéristiques, l'anneau s'étend le long de la surface externe de l'extrémité suivant une distance supérieure ou égale à la moitié de la longueur de la zone filetée femelle.

Selon d'autres caractéristiques, un jeu d'au moins 2 mm est ménagé entre l'anneau et la surface externe de l'extrémité.

Selon d'autres caractéristiques, le composant tubulaire est un composant choisi parmi les tubes de cuvelage expansibles, les tubes de production expansibles, les manchons expansibles.

D'autres avantages et caractéristiques de l'invention apparaîtront dans la description détaillée ci-après à titre d'exemples nullement limitatifs et dans les dessins annexés, qui pourront donc non seulement servir à mieux faire comprendre l'invention mais aussi contribuer à sa définition le cas échéant.

La figure 1 représente une vue partielle d'une coupe longitudinale d'un dispositif de protection selon un mode de réalisation de l'invention, appliqué à la protection d'une l'extrémité d'un composant tubulaire comportant un filetage femelle.

La figure 2 représente une vue partielle d'une coupe longitudinale d'un ensemble constitué d'un dispositif de protection vissé sur un composant tubulaire comportant un filetage femelle, selon un mode de réalisation de l'invention.

La figure 1 représente une vue partielle d'une coupe longitudinale d'un dispositif de protection 100 comportant un embout 110 de forme globalement cylindrique ainsi qu'un anneau 120. L'embout 110 et l'anneau 120 sont solidaires entre eux en ce sens qu'on ne peut les déplacer l'un sans l'autre. Cependant, l'anneau 120 peut tourner sur lui-même, indépendamment de l'embout 110.

Dans ce mode de réalisation de l'invention, le dispositif est destiné à la protection d'une partie de la surface externe de l'extrémité d'un composant tubulaire comportant un filetage femelle. Ledit composant tubulaire n'est pas représenté sur la figure 1. L'embout 110 admet une zone filetée mâle 112 dimensionnée pour être vissée sur la zone filetée femelle du composant tubulaire. On entend par zone filetée toute zone appartenant à la surface périphérique du composant tubulaire, et qui comprend un filetage, le filetage pouvant être continu, interrompu, régulier, irrégulier, etc... De manière habituelle, les composants tubulaires comprennent des zones filetées répondant aux spécifications de la norme API. Toujours conformément à l'invention, le diamètre de l'anneau 120 est choisi pour entourer l'extrémité du composant tubulaire.

Avantageusement, l'embout 110 et l'anneau 120 sont solidarisés au moyen d'une fixation par encliquetage. Ce type de fixation présente en effet l'avantage d'un assemblage rapide et peu coûteux entre l'embout et l'anneau.

Avantageusement, l'encliquetage est constitué d'une rainure 111 pratiquée dans l'embout 110 et d'au moins un ergot 121 rapporté sur l'anneau 120, l'ergot 121 étant dimensionné de manière à être encliqueté mobile dans la rainure 111. La coopération de la rainure 111 et de l'ergot 121 met en effet en jeu des éléments simples à réaliser en termes de fabrication.

On notera que selon une variante de réalisation non représentée sur les figures, il est également possible de pratiquer la rainure dans l'anneau et de rapporter l'ergot sur l'embout.

De manière préférentielle, l'anneau est doté de trois ergots 121 répartis de manière équidistante, de manière à renforcer la solidarisation de l'anneau 120 sur l'embout 110.

Avantageusement la surface externe 122 de l'anneau 120 comporte des cannelures, non représentées sur la figure, s'étendant suivant une direction voisine de l'axe de révolution de l'anneau 120. Ainsi, lorsque plusieurs composants tubulaires empilés s'entrechoquent, ce sont les dispositifs de protection qui amortissent les chocs notamment en transmettant grâce aux cannelures leur mouvement de rotation lorsqu'ils entrent en contact.

Avantageusement, le dispositif comprenant l'anneau 120 et l'embout 110 est constitué d'un matériau absorbant les chocs.

Avantageusement, l'anneau 120 et l'embout 110 sont en polyéthylène haute densité, ce qui permet d'une part d'absorber les chocs et d'autre part de réaliser les pièces simplement par moulage.

Bien entendu, il est possible de choisir un autre matériau appartenant par exemple dans la famille des plastiques styrèniques (polystyrène, ABS, etc...) ou bien des plastiques polyoléfines (Polyéthylène Haute Densité, Polypropylène...).

Avantageusement, le dispositif comporte un moyen 300 apte à rigidifier l'embout 110. Ce moyen peut par exemple consister en une pièce en tôle métallique épousant la périphérie de l'embout aux endroits que l'on souhaite renforcer.

La figure 2 représente un ensemble constitué de l'extrémité 200 d'un composant tubulaire doté d'une zone filetée femelle 201 et d'un dispositif de protection 100 conforme à l'invention, dans lequel un embout 110 comporte une zone filetée mâle 112 vissée dans la zone filetée femelle 201 située à l'extrémité 200 du composant tubulaire. Sur l'embout 110 est solidarisé en rotation libre un anneau 120 couvrant en partie la surface externe de l'extrémité 200 du composant tubulaire.

Avantageusement, le dispositif de protection comporte de préférence les caractéristiques décrites précédemment. Plus précisément, l'anneau 120 est encliqueté sur l'embout 110, l'encliquetage étant réalisé au moyen d'une rainure 111 pratiquée dans l'embout 110 et au moyen au moins trois ergots rapportés sur l'anneau 120. De même, l'embout et l'anneau sont réalisés par moulage en polyéthylène haute densité. De même, l'anneau comporte des cannelures s'étendant longitudinalement (et non représentées sur la figure 2).

Avantageusement, l'anneau s'étend depuis l'extrémité 200 du composant tubulaire sur une distance au moins égale à la moitié de la longueur de la zone filetée femelle. Par exemple pour une longueur de filetage de 131 mm, l'anneau 120 doit admettre une longueur de 65.5 mm. De ce fait, l'extrémité 200, qui présente une épaisseur minimum de 3.65 mm constituant une zone particulièrement fragile, est protégée.

Avantageusement, un jeu d'au moins 2 mm est ménagé entre l'anneau 120 et la surface externe de l'extrémité 200, de manière à ce que l'anneau ne puisse pas frotter sur ladite surface externe lorsque les composants tubulaires entrent en contact entre eux.

Les composants tubulaires peuvent être des tubes de cuvelage, des tubes de production ou bien des manchons utilisés dans l'exploitation de puits pour la production d'hydrocarbures ou pour la géothermie et peuvent être destinés à subir une expansion diamétrale.

Bien entendu, l'invention peut aussi s'appliquer à des composants tubulaires utilisés dans l'exploitation de puits pour la production d'hydrocarbures ou pour la géothermie et ayant une faible épaisseur en leurs extrémités. On entend alors par faible épaisseur, des épaisseurs de l'ordre du millimètre.

Ainsi, lorsque plusieurs composants tubulaires empilés entrent en contact au niveau de leurs extrémités, ce sont les anneaux, et non les embouts, qui entrent en contact empêchant ainsi le dévissage des embouts.

## Revendications

1. Dispositif (100) pour protéger l'extrémité (200) d'un composant tubulaire, ladite extrémité (200) comportant une première zone filetée femelle (201), le dispositif (100) comportant un embout (110) doté d'une seconde zone filetée mâle (112) apte à coopérer avec la première zone filetée femelle (201) du composant tubulaire, et un anneau (120) apte à couvrir une partie de la surface externe de l'extrémité (200) du composant tubulaire, **caractérisé en ce que** l'anneau (120) est solidaire de l'embout (110) avant le montage du dispositif (100) sur ladite extrémité (200), de sorte que l'anneau (120) est libre de tourner sur lui-même indépendamment de l'embout (110).

2. Dispositif (100) selon la revendication 1, **caractérisé en ce que** l'embout (110) et l'anneau (120) sont solidarisés par encliquetage d'au moins un ergot (121) disposé sur l'un de l'embout (110) et de l'anneau (120) dans une rainure (111) pratiquée dans l'autre de l'embout (110) et de l'anneau (120).

3. Dispositif (100) selon la revendication 2, **caractérisé en ce que** la rainure (111) est pratiquée dans l'embout (110) et **en ce que** le ou les ergots (121) sont rapportés sur l'anneau (120).

4. Dispositif (100) selon la revendication 3, **caractérisé en ce que** l'anneau (120) présente trois ergots (121) équidistants les uns des autres.

5. Dispositif (100) selon l'une quelconque des revendications 2 à 4, **caractérisé en ce que** le ou les ergots (121) ou la rainure (111) sont disposés sur l'anneau (120) au voisinage d'une extrémité du côté de l'anneau opposé à celui apte à couvrir la partie de la surface externe de l'extrémité (200) du composant tubulaire.

6. Dispositif (100) selon l'une quelconque des revendications 1 à 5, **caractérisé en ce que** l'anneau (120) est apte à s'étendre axialement principalement sur l'extrémité (200) du composant tubulaire et partiellement au-delà de cette extrémité, laissant découverte l'extrémité de l'embout (110) du côté de l'anneau opposé à celui apte à couvrir une partie de la surface externe de l'extrémité (200) du composant tubulaire.

7. Dispositif (100) selon l'une quelconque des revendications 1 à 6, **caractérisé en ce que** la surface externe (122) de l'anneau (120) comporte des cannelures s'étendant suivant une direction voisine de l'axe de révolution de l'anneau (120).

8. Dispositif (100) selon l'une quelconque des revendications 1 à 7, **caractérisé en ce que** l'anneau (120) et l'embout (110) sont en matériau synthétique absorbant les chocs.

9. Dispositif (100) selon l'une quelconque des revendications 1 à 8, **caractérisé en ce qu'**il est réalisé principalement en polyéthylène haute densité.

10. Dispositif (100) selon l'une quelconque des revendications 1 à 9, **caractérisé en ce que** le dispositif comprend un moyen (300) apte à rigidifier l'embout (110).

11. Ensemble constitué d'un composant tubulaire doté d'une extrémité (200) comportant une zone filetée femelle (201) et d'un dispositif conforme à l'une quelconque des revendications 1 à 10 qui est monté sur ladite extrémité pour protéger cette dernière.

12. Ensemble selon la revendication 11, **caractérisé en ce que** l'anneau (120) s'étend le long de la surface externe de l'extrémité (200) du composant tubulaire
suivant une distance supérieure ou égale à la moitié de la longueur de la zone filetée femelle (201).

13. Ensemble selon la revendication 11 ou 12, **caractérisé en ce qu'**un jeu (203) d'au moins 2 mm est ménagé entre l'anneau (120) et la surface externe de l'extrémité (200) du composant tubulaire.

14. Ensemble selon l'une quelconque des revendications 11 à 13, **caractérisé en ce que** le composant tubulaire est un composant choisi parmi les tubes de cuvelage expansibles, les tubes de production expansibles, les manchons expansibles.

## Patentansprüche

1. Vorrichtung (100) zum Schutz des Endes (200) einer Rohrkomponente, wobei das Ende (200) einen ersten weiblichen Gewindeabschnitt (201) aufweist, wobei die Vorrichtung (100) eine Endabdeckung (110) aufweist, die mit einem zweiten männlichen Gewindeabschnitt (112) versehen ist, der mit dem ersten weiblichen Gewindeabschnitt (201) der Rohrkomponente zusammenwirken kann, und einen Ring (120), der einen Teil der äußeren Oberfläche des Endes (200) der Rohrkomponente bedecken kann,
**dadurch gekennzeichnet, dass** der Ring (120) vor der Montage der Vorrichtung (100) auf dem Ende (200) mit der Endabdeckung (110) fest verbunden ist, derart, dass der Ring (120) sich unabhängig von der Endabdeckung (110) frei um sich selbst drehen kann.

2. Vorrichtung (100) nach Anspruch 1,
**dadurch gekennzeichnet, dass** die Endabdeckung (110) und der Ring (120) durch Verrasten mindestens einer Kralle (121), die auf der Endabdeckung (110) oder dem Ring (120) angeordnet ist, in einer Nut (111), die in dem anderen Teil, dem Ring (120) oder der Endabdeckung (110), eingearbeitet ist, miteinander fest verbunden sind.

3. Vorrichtung (100) nach Anspruch 2,
**dadurch gekennzeichnet, dass** die Nut (111) in der Endabdeckung (110) eingearbeitet ist, und
dadurch, dass die Krallen (121) auf dem Ring (120) angebracht sind.

4. Vorrichtung (100) nach Anspruch 3,
**dadurch gekennzeichnet, dass** der Ring (120) drei Krallen (121) aufweist, die voneinander gleich beabstandet sind.

5. Vorrichtung (100) nach einem der Ansprüche 2 bis 4,
**dadurch gekennzeichnet, dass** die Kralle oder die Krallen (121) oder die Nut (111) auf dem Ring (120) in der Nähe eines Endes der Seite des Rings angeordnet ist bzw. sind, die der Seite gegenüberliegt, die den Bereich der Außenfläche des Endes (200) der Rohrkomponente abdecken kann.

6. Vorrichtung (100) nach einem der Ansprüche 1 bis 5,
**dadurch gekennzeichnet, dass** der Ring (120) sich axial im Wesentlichen auf dem Ende (200) der Rohrkomponente und teilweise über dieses Ende hinaus erstrecken kann, wobei er das Ende der Endabdeckung (110) auf der Seite des Rings, die der Seite gegenüberliegt, die einen Teil der Außenfläche des Endes (200) der Rohrkomponente abdecken kann, freilässt.

7. Vorrichtung (100) nach einem der Ansprüche 1 bis 6,
**dadurch gekennzeichnet, dass** die Außenfläche (122) des Rings (120) Längsrillen aufweist, die sich in einer Richtung nahe der Drehachse des Rings (120) erstrecken.

8. Vorrichtung (100) nach einem der Ansprüche 1 bis 7,
**dadurch gekennzeichnet, dass** der Ring (120) und die Endabdeckung (110) aus einem schlagabsorbierenden Material sind.

9. Vorrichtung (100) nach einem der Ansprüche 1 bis 8,
**dadurch gekennzeichnet, dass** sie im Wesentlichen aus Polyethylen mit hoher Dichte gefertigt ist.

10. Vorrichtung (100) nach einem der Ansprüche 1 bis 9,
**dadurch gekennzeichnet, dass** die Vorrichtung ein Mittel (300) aufweist, welches die Endabdeckung (110) versteifen kann.

11. Einheit bestehend aus einer Rohrkomponente, die mit einem Ende (200) versehen ist, welches einen weiblichen Gewindeabschnitt (201) aufweist, und einer Vorrichtung gemäß einem der Ansprüche 1 bis 10, die auf dem Ende montiert ist, um dieses zu schützen.

12. Einheit nach Anspruch 11,
**dadurch gekennzeichnet, dass** der Ring (120) sich entlang der Außenfläche des Endes (200) der Rohrkomponente in einem Abstand erstreckt, der größer oder gleich der Hälfte der Länge des weiblichen Gewindeabschnitts (201) ist.

13. Einheit nach Anspruch 11 oder 12,
**dadurch gekennzeichnet, dass** ein Spiel (203) von mindestens 2 mm zwischen dem Ring (120) und der Außenfläche des Endes (200) der Rohrkomponente vorgesehen ist.

14. Einheit nach einem der Ansprüche 11 bis 13,
**dadurch gekennzeichnet, dass** die Rohrkomponente eine Komponente ist, die ausgewählt ist aus den aufweitbaren Schachtrohren, den aufweitbaren Förderrohren und den aufweitbaren Muffen.

## Claims

1. A device (100) for protecting the end (200) of a tubular component, said end (200) comprising a first female threaded zone (201), the device (100) comprising an end piece (110) provided with a second male threaded zone (112) which is suitable to cooperate with the first female threaded zone (201) of the tubular component, and a ring (120) which is suitable to cover a portion of the outer surface of the end (200) of the tubular component, **characterized in that** the ring (120) is bound up with the end piece (110) before mounting the device (100) on said end (200) such that the ring (120) is free to turn about itself independently of the end piece (110).

2. A device (100) according to claim 1, **characterized in that** the end piece (110) and the ring (120) are bound up by latching at least one pin (121) disposed on one of the end piece (110) or the ring (120) in a groove (111) formed in the other one of the end piece (110) or the ring (120).

3. A device (100) according to claim 2, **characterized in that** the groove (111) is formed in the end piece (110) and **in that** the pin or pins (121) is/are disposed on the ring (120).

4. A device (100) according to claim 3, **characterized in that** the ring (120) includes three pins (121) which are equidistant from each other.

5. A device (100) according to any one of claims 2 to 4, **characterized in that** the pin or pins (121) or the groove (111) are fixed on the ring (120) close to one end on the side of the ring opposite the side suitable to cover the portion of the outer surface of the end (200) of the tubular component.

6. A device (100) according to any one of claims 1 to 5, **characterized in that** the ring (120) is suitable to extend radially mainly on the end (200) of the tubular component and partially beyond said end, leaving the end of the end piece uncovered (110) on the side of the ring opposite the side suitable to cover a portion of the outer surface of the end (200) of the tubular component.

7. A device (100) according to any one of claims 1 to 6, **characterized in that** the outer surface (122) of the ring (120) comprises ribs extending in a direction close to the axis of revolution of the ring (120).

8. A device (100) according to any one of claims 1 to 7, **characterized in that** the ring (120) and the end piece (110) are formed from synthetic shock-absorbant material.

9. A device (100) according to any one of claims 1 to 8, **characterized in that** it is principally made of high density polyethylene.

10. A device (100) according to any one of claims 1 to 9, **characterized in that** the device comprises a means (300) suitable for stiffening the end piece (110).

11. An assembly constituted by a tubular component provided with an end (200) comprising a female threaded zone (201) and a device according to any one of claims 1 to 10 mounted on said end so as to protect it.

12. An assembly according to claim 11, **characterized in that** the ring (120) extends along the outer surface of the end (200) of the tubular component by a distance which is greater than or equal to half the length of the female threaded zone (201).

13. An assembly according to claim 11 or claim 12, **characterized in that** a clearance (203) of at least 2 mm is provided between the ring (120) and the outer surface of the end (200) of the tubular component.

14. An assembly according to any one of claims 11 to 13, **characterized in that** the tubular component is a component selected from expandable casing tubes, expandable tubing tubes and expandable couplings.
